Europäisches Patentamt

**European Patent Office**

Office européen des brevets

(19)

(11) Numéro de publication : **0 168 328 B1**

# FASCICULE DE BREVET EUROPÉEN

(12)

(45) Date de publication du fascicule du brevet :
**11.10.89**

(51) Int. Cl.⁴ : **A 01 B 39/08**, A 01 B 29/04

(21) Numéro de dépôt : **85401414.9**

(22) Date de dépôt : **11.07.85**

(54) **Outil agricole tel qu'une écrouteuse.**

(30) Priorité : 11.07.84 FR 8411025
10.07.85 FR 8510581

(43) Date de publication de la demande :
**15.01.86 Bulletin 86/03**

(45) Mention de la délivrance du brevet :
**11.10.89 Bulletin 89/41**

(84) Etats contractants désignés :
**AT BE CH DE GB IT LI LU NL SE**

(56) Documents cités :
**FR–A– 679 809**
**FR–A– 2 525 066**
**GB–A– 2 033 201**
**US–A– 1 718 823**
**US–A– 2 896 730**
**US–A– 3 756 203**
**US–A– 4 020 906**
**US–A– 4 231 433**
**US–A– 4 241 793**

(73) Titulaire : **Prieur, Claude**
**10, rue de Jouy**
**F-77160 Provins (Seine & Marne) (FR)**

(72) Inventeur : **Prieur, Claude**
**10, rue de Jouy**
**F-77160 Provins (Seine & Marne) (FR)**

(74) Mandataire : **Cabinet Pierre HERRBURGER**
**115, Boulevard Haussmann**
**F-75008 Paris (FR)**

Jouve, 18, rue St-Denis, 75001 Paris, France

## Description

L'invention concerne un outil agricole tel qu'une écroûteuse, destiné à être fixé sur le dispositif trois points d'un véhicule tracteur.

On connaît déjà par le brevet américain N° 4 241 793 un outil agricole de ce genre, dont les roues destinées à ameublir le sol comprennent chacune deux flasques annulaires entre lesquelles sont fixées radialement des dents. Ces roues sont supportées par un même châssis monté pivotant à l'encontre d'un ressort sur une structure de support.

Suivant la demande de brevet en Grande-Bretagne N° 2 033 201, il est décrit une machine à récolter les betteraves, qui comporte des élévateurs pour les betteraves récoltées, cette machine étant pourvue d'une roue palpeuse entraînée en rotation et dont la vitesse de rotation périphérique est supérieure à celle du déplacement de la machine. Cette roue palpeuse est pourvue à sa périphérie, de couronnes annulaires dentées.

Vis-à-vis de ces dispositifs connus, la présente demande de brevet concerne un outil agricole tel qu'une écroûteuse, destiné à être fixé sur le dispositif trois points d'un véhicule tracteur, ce dispositif comportant un châssis portant une roue à libre rotation sur son axe et dont la face de roulement est pourvue de lames de coupe, ce châssis étant articulé sur un arbre support et suspendu élastiquement, outil agricole caractérisé en ce que les lames de coupe sont disposées dans la direction d'avancement de l'outil tracté et sont constitués par des dents en forme générale de triangle, réalisées à la périphérie de couronnes métalliques, ces couronnes étant engagées parallèlement sur un flasque de roue moulée avec interposition de rondelles biseautées de telle sorte que deux rondelles voisines déterminent entre deux couronnes dentées un fond de roue en forme de V.

Suivant une autre caractéristique de l'invention, l'arbre de support est constitué par un profilé à section polygonale susceptible d'être pivoté sous l'action d'un vérin par l'intermédiaire d'une bielle reliant le vérin à l'arbre de support et en ce que les châssis portant les roues constituent chacun une unité indépendante susceptible d'être coulissée et réglée en position sur l'arbre de support polygonal.

L'invention est représentée à titre d'exemple non limitatif sur les dessins ci-joints dans lesquels :

la figure 1 est une vue en perspective d'un élément individuel de l'écroûteuse,

la figure 2 est une vue de côté de la roue de l'écroûteuse conforme à la figure 1,

la figure 3 est une vue en coupe de la roue suivant AA de la figure 2 précédente.

la figure 4 est une vue de côté de l'outil,

la figure 5 est une vue de dessus de l'outil.

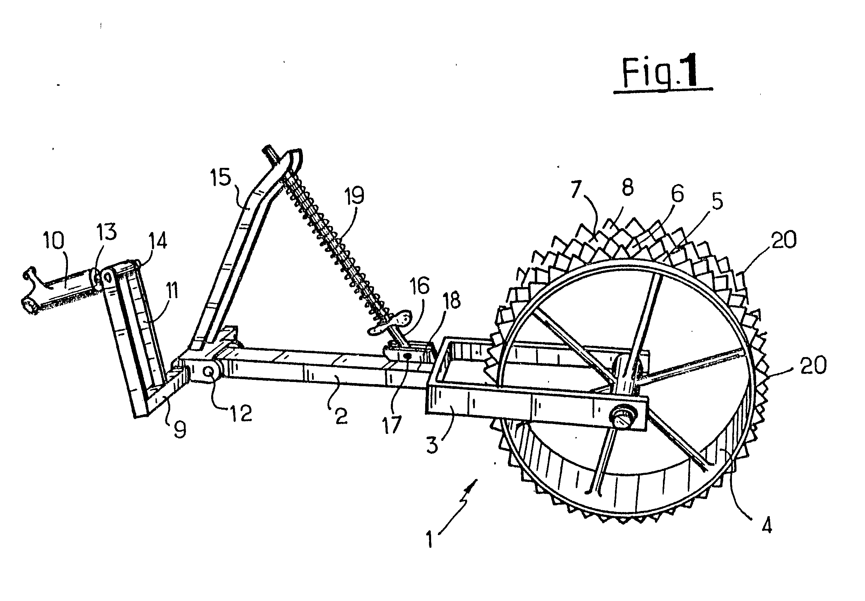

Selon la figure 1, l'élément individuel 1 de l'écroûteuse est composé d'un châssis 2 dont la fourche 3 porte une roue 4. Cette roue 4 pourrait être constituée par un tambour. La face externe de la roue 4 est pourvue d'organes de coupe constitués par des lames de coupe 5, 6, 7, 8. Ces lames de coupe sont concentriques et parallèles et sont destinées, lors de la rotation de la roue ou du tambour 4, à découper la terre durcie sous forme de lamelles, ceci sans endommager les jeunes plants disposés en-dessous de la croûte de terre. Cet élément de l'écroûteur permet d'économiser du point de vue des dégâts au moins 10 à 20 % en graines suivant les années. En outre, une telle écroûteuse représente une sécurité pour le planteur car il n'est plus nécessaire de ressemer à la suite de dégâts provoqués par les conditions climatiques.

Cet élément d'écroûteuse est particulièrement étudié pour découper les croûtes de terre formées par les éléments naturels tels que le vent et la pluie favorisant ainsi la levée et la sortie naturelles hors du sol des plants qui peuvent continuer à croître et à se développer jusqu'à leur maturité.

L'élément d'écroûteuse 1 est également pourvu d'un arbre support 9 relié au vérin 10 par une bielle 11 solidaire de l'arbre 9. L'arbre support 9 est un profilé carré sur lequel est articulé le châssis 2 au niveau de l'axe 12.

La bielle 11 est fixée, d'une part, à l'extrémité du piston 13 du vérin 10 de manière à pouvoir pivoter autour de l'axe 14. La bielle 11 est en outre solidaire par soudure de l'arbre support 9. Ainsi, sous l'action du vérin 10, il est possible de mettre en rotation l'arbre support 9. Ce dernier porte également le système de suspension de la roue pour appliquer cette dernière au sol. Ce système de suspension est formé par un bras tendeur 15 rigide et solidaire de l'une des faces du profilé carré constituant l'arbre support 9. Le système de suspension est formé en outre d'une tige de liaison 16 montée pivotante sur l'axe 17 au niveau des brides 18 solidaires du châssis 2. La tige de liaison 16 est entourée d'un ressort 19. Ainsi, lorsque l'on met en rotation l'arbre support 9, on agit du même coup sur l'inclinaison du bras tendeur 15 qui comprime plus ou moins le ressort 19 et applique par conséquent plus ou moins fortement la roue ou le tambour 4 sur le sol en agissant sur le châssis 2 monté pivotant.

Chaque lame de coupe 5, 6, 7, 8 est pourvue de dents. Les dents de deux lames de coupe 5, 6, par exemple voisines, sont décalées en quinconce. Les dents 20 de chaque lame 5, 6, 7, 8, pénètrent dans le sol durci pour découper ce dernier sans atteindre pourtant les jeunes plants disposés en-dessous de la croûte de terre. En effet, il est prévu à proximité de la périphérie de la roue ou du tambour 4 des organes de limitation de l'enfoncement des lames de coupe dans le sol. Ces organes de limitation, non représentés sur cette figure, peuvent être constitués par des réglettes ou par des picots fixés sur la face de roulement de la roue ou du tambour 4 ou encore sur les faces latérales des lames de coupe d'extrémité 8.

L'élément 1 de l'écroûteuse est parfaitement adapté à tous les types de sols quelles que soient les irrégularités de celui-ci. En effet, l'action combinée de l'articulation du châssis 2 sur l'axe 12 ainsi que du dispositif de suspension commandé à partir du vérin 10, permet à l'élément 1 d'absorber toutes les différences de niveau du sol ou d'être appliqué plus ou moins fortement sur le sol, quelle que soit sa nature (sol gras, sec, argileux, pierreux etc...).

Les lames de coupe 5 à 8 sont interchangeables. Ainsi, après usure, celles-ci peuvent être rapidement remplacées. Il est possible également, suivant la nature des cultures ou des sols, de mettre en place deux, trois, quatre, cinq ou six lames de coupe sur la même roue ou tambour 4. En outre, il est possible de monter plusieurs éléments 1 sur l'arbre support 9 de manière à avoir une succession de plusieurs roues ou tambours portant des lames de coupe. En effet, le châssis 2 est monté de manière coulissante sur l'arbre support 9. Le châssis peut également être réglé en position sur l'arbre support 9.

Suivant l'état et la nature des sols et de la dureté de la croûte, la pénétration dans le sol des roues ou tambours 4, pourvus des lames de coupe 5 à 8, est complétée par des vérins hydrauliques commandés eux-mêmes par un régulateur de pression non représenté sur cette figure. Il est donc possible à l'utilisateur et ceci à partir de son tracteur, de régler en permanence la pression à exercer sur le sol par l'intermédiaire des vérins hydrauliques 10. Ceci peut se faire sans modifier la profondeur de pénétration des lames de coupe 5 à 8 dans les sols, grâce à l'action des organes de limitation de l'enfoncement de l'élément 1.

Il est possible également d'adjoindre à l'élément 1 d'autres éléments porteurs de roues ou de tambours et former ainsi par exemple une écroûteuse à douze rangs de roues ou tambours.

Selon un premier mode de réalisation, l'ensemble de base de l'écroûteuse comporte six rangs de châssis 2 pourvus de roues 4. Il est possible de compléter cet élément de base 1 par des éléments supplémentaires qui sont escamotables lors du transport routier. Que ce soit l'écroûteuse de base comportant six ensembles 1 ou une écroûteuse de base comportant des éléments escamotables, chacun de ces éléments est susceptible d'être équipé de roues de soutien et de disques de terrage empêchant toute dérive hors des rangs des semis.

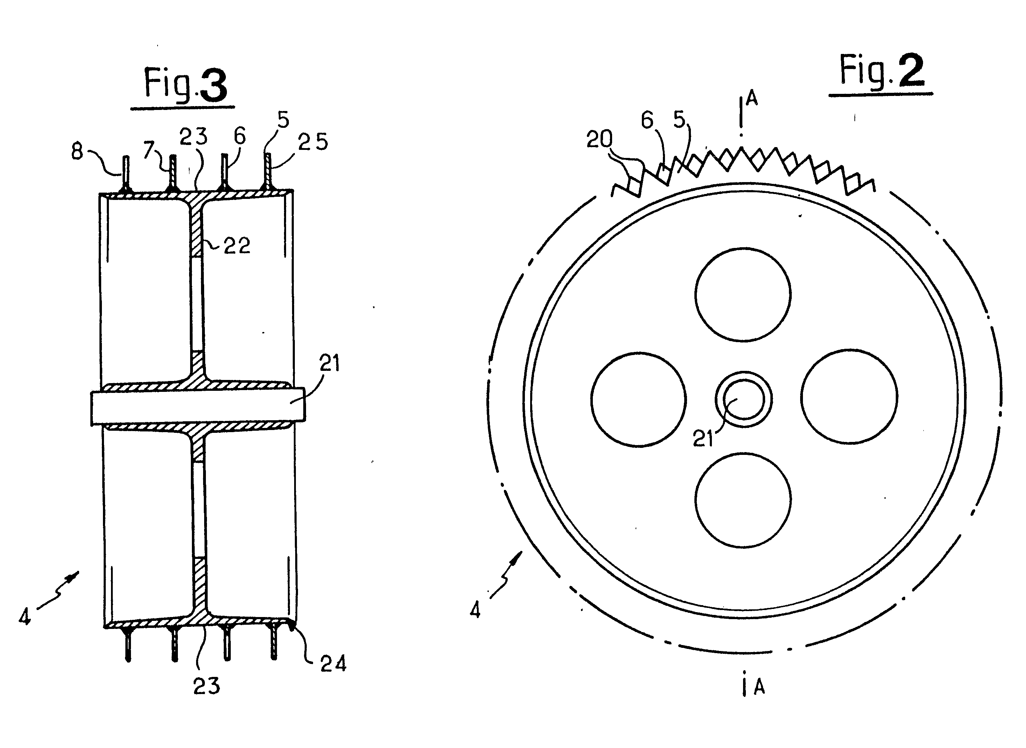

Selon la figure 2, la roue 4 qui est un des modes de réalisation de l'invention comporte un axe central 21 autour duquel tourne librement la roue 4. La périphérie de la roue, c'est-à-dire la face de roulement de la roue, est pourvue de lames de coupe 5, 6. Ces lames de coupe sont denturées, les dents 20 de deux lames de coupe 5, 6, voisines sont décalées en quinconce. Chaque dent 20 en outre présente une forme générale triangulaire dont l'angle de sommet est sensiblement égal à 90°.

Les lames de coupe 5, 6, sont des disques en acier comportant chacun 47 dents.

Selon la figure 3, la roue 4 est en rotation libre sur l'axe 21. Le corps de roue 22 est réalisé en métal moulé. Cependant, il est possible d'imaginer d'autres modes de réalisation.

La surface de roulement 23 de chaque roue 4 comporte des lames de coupe 5, 6, 7, 8 denturées. La hauteur de ces lames de coupe varie en fonction des sols et des cultures à traiter.

En outre, l'organe de limitation 24 permet d'éviter un enfoncement trop profond des lames 5 à 8 dans le sol. Les organes de limitation 24 peuvent être constitués par des réglettes fixées sur la bande de roulement 23 de la roue 4 ou encore par des picots concentriques montés sur les faces 25 latérales des lames de coupe d'extrémité 5 ou 8. De tels picots ne sont pas représentés sur ces figures.

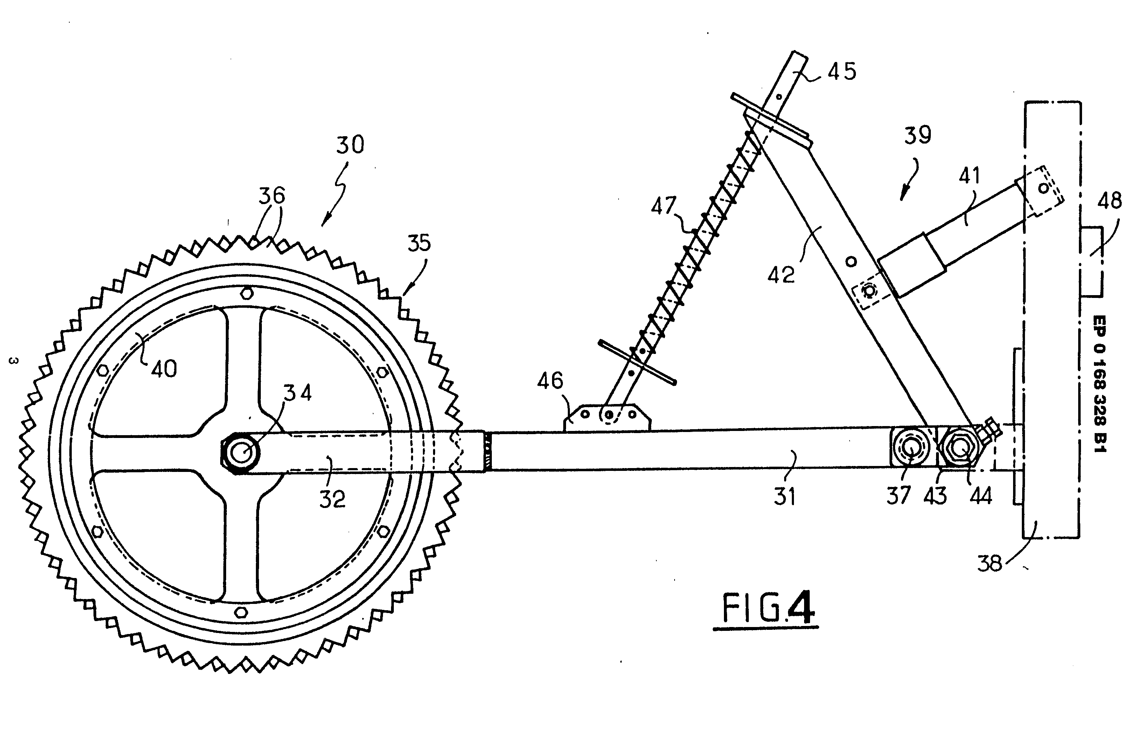

Selon la figure 4, l'outil agricole 30 est une écroûteuse. Cet outil est principalement constitué d'un châssis 31 formé notamment de deux branches 32, 33, dont seule la branche 32 est visible sur cette figure. L'axe 34 porte la roue écroûteuse 35. La face de roulement de la roue 35 est pourvue de lames de coupe constituées par des couronnes denturées 36.

Le châssis 31 est articulé sur l'axe 37 et est relié de façon pivotante sur le cadre profilé 38. Ce cadre de profilé 38 est lui-même destiné à être fixé sur le système d'attache trois points d'un véhicule tracteur.

L'outil agricole 30 comporte, en outre, un dispositif de suspension 39 permettant de régler la pression au sol de la roue 35 en fonction de la dureté plus ou moins importante de ce sol. Le dispositif de suspension 39 sera décrit plus en détail ci-après.

La roue 35 est constituée, notamment, d'un flasque 40 obtenu par moulage. Il reçoit, sur sa surface de roulement, les éléments périphériques formant l'écroûteuse. Ces éléments périphériques sont constitués par des couronnes dentées 36. Les couronnes dentées 36 sont réalisées en métal tel que de l'acier. Les éléments périphériques sont également constitués de rondelles moulées et profilées disposées entre deux couronnes denturées 36 successives. Les rondelles moulées et profilées sont réalisées en un matériau tel que du caoutchouc.

Les couronnes denturées 36 ainsi que les rondelles de caoutchouc profilées sont montées alternativement par-engagement à force sur le flasque de la roue 40. Ce dernier est réalisé par moulage en un matériau tel que de l'aluminium.

Les éléments périphériques sont amovibles et le flasque est susceptible de recevoir, éventuellement,. d'autres éléments périphériques correspondant à d'autres outils agricoles.

En outre, il est à noter que la roue 35 est également montée de façon amovible, l'axe de la roue 34 étant susceptible de recevoir des outils agricoles de natures diverses destinés à être tractés, présentant donc une forme cylindrique ou circulaire.

Le dispositif de suspension 39 de la roue 35 sur le cadre 36 est constitué, notamment, d'un vérin 41 relié à un circuit hydraulique. Le vérin 41 agit sur le bras tendeur 42 solidaire de l'arbre support 43 et susceptible de pivoter autour de l'axe 44.

Le bras tendeur 42 est, en outre, relié au châssis 31 par une tige de liaison 45 articulée, elle-même, sur la plaquette 46 solidaire du châssis 31. Un ressort de rappel 47 agit sur le bras tendeur 42. Cet ensemble permet d'appliquer la roue écroûteuse 35 sur le sol, de façon élastique avec un effet amortisseur lorsque cette roue franchit certains obstacles.

L'outil 30 est, en outre, pourvu d'un dispositif 48 de régulation de la pression d'huile. Ce dispositif de régulation 46 permet d'agir sur le vérin de commande 41 de la rotation de l'arbre support 43. Cette régulation de la pression d'huile agissant sur le vérin 41, permet d'obtenir la pression souhaitée de l'outil 30 sur le sol en fonction de la dureté de ce dernier.

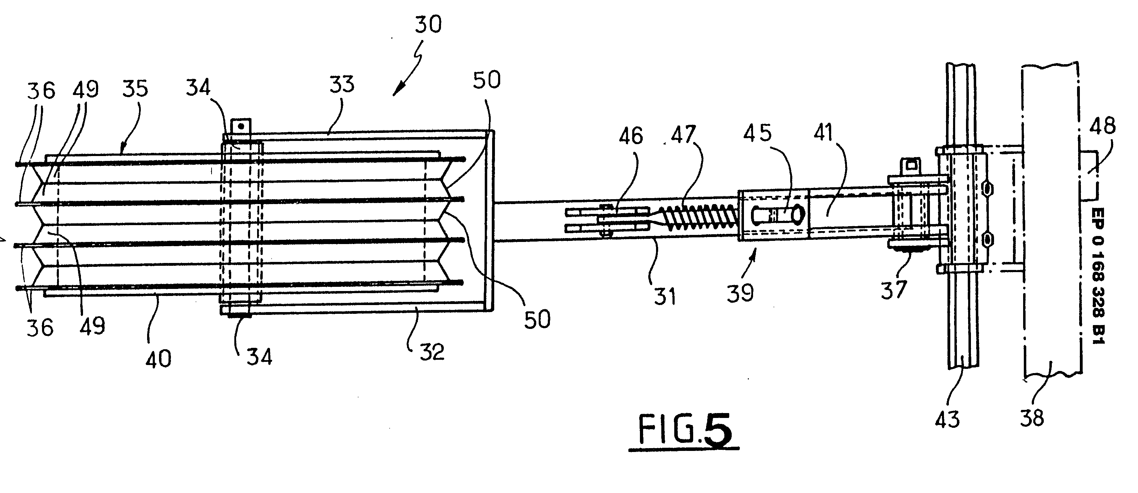

Selon la figure 5, l'outil 30 constitué par la roue 35 comporte donc un flasque moulé 40 en aluminium. Des couronnes denturées 36 ainsi que des rondelles en caoutchouc moulées et profilées 49 sont engagées à force sur le flasque de roue 40.

Chaque chant 50 de chaque rondelle en caoutchouc profilée 49 présente une forme biseautée. Cette forme biseautée est telle que deux rondelles voisines 44 déterminent entre deux couronnes denturées 36, un fond en forme de V dont les branches s'ouvrent vers l'extérieur de la roue. Cette forme et ce montage particulier des rondelles de caoutchouc 49 permet d'éviter de retourner les jeunes pousses de betteraves par exemple, lorsque l'écroûteuse passe sur la terre durcie des semis.

Comme indiqué tout à l'heure, la pression d'application de la roue 35 sur le sol est déterminée par le dispositif de régulation de la pression d'huile 48 sur la suspension 39 comprenant, notamment, le vérin 41. Par action du vérin, on entraîne l'arbre support 43 en rotation. Cet arbre 43 est un profilé à six pans. La rotation de l'arbre support 43 sous l'action du vérin, détermine la pression de la roue 35 sur le sol.

Le vérin de commande 41, suivant un mode de réalisation préférentiel, agit simultanément sur trois roues écroûteuses 35 formant une unité modulaire non représentée sur cette figure. Une telle unité modulaire est susceptible d'être combinée avec une ou plusieurs autres unités commandées chacune par un vérin distinct.

Suivant un mode de réalisation non représenté sur les figures 4 et 5, il est possible de réaliser le châssis 31 sous forme de deux profilés parallèles disposés de part et d'autre de l'axe 34 de la roue 35. Ces profilés relient l'axe 34 à l'arbre support 43. Les profilés parallèles suivant ce mode de réalisation non représenté sur les figures, portent des organes tasseurs tels que des roues de tassage montées élastiquement sur les profilés. Les roues sont montées entre le cadre 38 et la roue 35 proprement dite. L'effet de tassage de ces roues de tassage permet d'égaliser le terrain au niveau des buttes ou des creux formés par le semoir et, par conséquent, facilite l'action de la roue écroûteuse 35.

## Revendications

1. Outil agricole tel qu'une écroûteuse, destiné à être fixé sur le dispositif trois points d'un véhicule tracteur, ce dispositif comportant un châssis portant une roue (4) à libre rotation sur son axe et dont la face de roulement est pourvue de lames de coupe, ce châssis étant articulé sur un arbre support et suspendu élastiquement, outil agricole caractérisé en ce que les lames de coupe sont disposées dans la direction d'avancement de l'outil tracté et sont constitués par des dents en forme générale de triangle, réalisées à la périphérie de couronnes métalliques (36), ces couronnes étant engagées parallèlement sur un flasque de roue moulée (40) avec interposition de rondelles biseautées (50) de telle sorte que deux rondelles voisines déterminent entre deux couronnes dentées un fond de roue en forme de V.

2. Outil conforme à la revendication 1, caractérisé en ce que les dents (20, 36) des couronnes voisines sont décalées en quinconce.

3. Outil conforme à la revendication 1, caractérisé en ce que l'arbre de support (9) est constitué par un profilé à section polygonale susceptible d'être pivoté sous l'action d'un vérin (10) par l'intermédiaire d'une bielle (11) reliant le vérin à l'arbre de support (9) et en ce que les châssis (2) portant les roues (4) constituent chacun une unité indépendante susceptible d'être coulissée et réglée en position sur l'arbre de support polygonal.

4. Outil conforme à l'une quelconque des revendications précédentes, caractérisé en ce que les couronnes portant les lames de coupe sont interchangeables.

5. Outil conforme à l'une quelconque des revendications 1 et 3, caractérisé en ce que la suspension élastique du châssis (2) est constituée par un bras tendeur (15) solidaire de l'arbre support (9) de section polygonale, ce bras coopérant avec une tige de liaison (16) pourvue d'un ressort (19) et montée articulée sur le châssis support de la roue, ce châssis étant relié à l'arbre support par une articulation (12).

## Claims

1. Agricultural implement such as a scarifier, designed to be fixed to the three-point device of a tractor, this device comprising a chassis bearing a wheel (4) free to rotate on its axle and whose rolling surface is provided with cutting blades, this chassis being hinged on a support arm and suspended resiliently, agricultural implement characterised in that the cutting blades are arranged in the direction of motion of the tractor-drawn implement and are made up of teeth in the overall shape of a triangle and arranged around the periphery of metallic rings (36), these rings being fitted parallel to each other on the disc of a cast wheel (40), with bevelled collars interposed in such a way that two adjacent collars form a V-shaped groove between two toothed rings.

2. Implement as claimed in claim 1, characterised in that the teeth (20, 36) of the adjacent rings are staggered.

3. Implement as claimed in claim 1, characterised in that the support arm (9) consists of a bar having a polygonal cross-section and capable of being pivoted by means of a jack (10) acting through a crank arm (11) connecting the jack to the support arm (9), and in that the chassis (2) bearing the wheels (4) each constitute an independent unit capable of sliding and being adjusted in position on the polygonal support arm.

4. Implement as claimed in any of the preceding claims, characterised in that the rings bearing the cutting blades are exchangeable.

5. Implement as claimed in either of claims 1 and 3, characterised in that the resilient suspension of the chassis (2) consists of a tensioning arm (15) rigidly fixed to the polygonal cross-section support arm (9), said tensioning arm working together with a connecting rod (16) fitted with a spring (19) and pivotally mounted on the wheel support chassis, said chassis being connected to the support arm through a pivot (12).

**Patentansprüche**

1. Landwirtschaftliches Gerät wie z. B. Krümler, welches zur Befestigung an der Dreipunkt-Einrichtung eines Zugfahrzeugs bestimmt ist und ein Chassis mit einem um seine Achse frei drehbaren Rad (4) umfaßt, dessen Lauffläche mit Schneidklingen versehen und das auf einem Tragarm drehbar gelagert und elastisch aufgehängt ist, dadurch gekennzeichnet, daß die Schneidklingen in der Fortbewegungsrichtung des gezogenen Geräts angeordnet sind und aus Zähnen im wesentlichen dreieckiger Form bestehen, die am Umfang metallischer Ringe (36) ausgebildet sind, die parallel zueinander auf einer gegossenen Radtrommel (40) angeordnet sind, wobei dazwischen abgeschrägte Ringe (50) derart angeordnet sind, daß zwei benachbarte solche Ringe zwischen zwei gezahnten Ringen einen V-förmigen Umfangsbereich bestimmen.

2. Gerät nach Anspruch 1, dadurch gekennzeichnet, daß die Zähne (20) benachbarter Ringe (36) in Umfangsrichtung gegeneinander versetzt sind.

3. Gerät nach Anspruch 1, dadurch gekennzeichnet, daß der Tragarm (9) aus einem Profil polygonalen Querschnitts besteht, das unter der Wirkung einer Kolbenzylindereinheit (10) über einen Lenker (11), der die Kolbenzylindereinheit mit dem Tragarm (9) verbindet, schwenkbar ist und daß die Räder (4) tragenden Chassis (2) jeweils eine unabhängig bewegliche und in ihrer Position auf dem polygonalen Tragarm einstellbare Einheit bilden.

4. Gerät nach einem der vorangehenden Ansprüche, dadurch gekennzeichnet, daß die Schneidklingen tragenden Ringe auswechselbar sind.

5. Gerät nach einem der Ansprüche 1 bis 3, dadurch gekennzeichnet, daß die elastische Aufhängung des Chassis (2) durch einen mit dem einen polygonalen Querschnitt aufweisenden Tragarm (9) fest verbundenen Spannarm (15) gebildet ist, der mit einer Verbindungsstange (16) zusammenwirkt, die mit einer Feder (19) verbunden und schwenkbar an dem Tragchassis des Rades angebracht ist, wobei das Chassis mit dem Tragarm über ein Schwenklager (12) verbunden ist.

## Fig.1

Fig.2

Fig.3

FIG.4

EP 0 168 328 B1

FIG.5

EP 0 168 328 B1